# EUROPÄISCHE PATENTSCHRIFT

(11) **EP 2 649 329 B1**
(45) Veröffentlichungstag und Bekanntmachung des Hinweises auf die Patenterteilung: **05.08.2015**
(21) Anmeldenummer: 11790953.1
(22) Anmeldetag: 29.11.2011
(51) Int. Cl.: F16B 31/02

(54) **SCHRAUBE MIT EINEM SCHRAUBENKOPF, EINEM SCHRAUBENSCHAFT UND EINEM KONISCHEN, GEWELLTEN FLANSCH**
SCREW HAVING A SCREW HEAD, A SCREW SHAFT, AND A CONICAL, WAVY FLANGE
VIS COMPRENANT UNE TÊTE, UNE TIGE ET UNE COLLERETTE ONDULÉE CONIQUE

(30) Priorität: 06.12.2010 DE 102010053412
(43) Veröffentlichungstag der Anmeldung: 16.10.2013
(73) Patentinhaber: EJOT GmbH & Co. KG, 57319 Bad Berleburg (DE)
(72) Erfinder: PINZL, Wilfried, 99897 Tambach-Dietharz (DE); HELLMIG, Ralph J., 57334 Bad Laasphe (DE)
(74) Vertreter: Puschmann Borchert Bardehle Patentanwälte Partnerschaft mbB
(86) Internationale Anmeldenummer: PCT/EP2011/071238
(87) Internationale Veröffentlichungsnummer: WO 2012/076360

(56) Entgegenhaltungen:
- EP-A1- 0 028 746
- EP-A1- 0 104 642

## Beschreibung

Die Erfindung bezieht sich auf eine Schraube mit einem Schraubenkopf, einem Schraubenschaft und einem konischen, gewellten Flansch mit nach außen hin abnehmender Stärke, der sich beim Eindrehen der Schraube in ein Bauteil an diesem anlegt.

Eine derartige Schraube ist in der europäischen Patentschrift 00 28 746 A1 dargestellt und beschrieben. Wie die Figur 11 dieser Druckschrift zeigt, besitzt die darin behandelte Schraube mit Schraubenkopf und Schraubenschaft auch einen Flansch, der beim Eindrehen der Schraube in ein Bauteil gegen die Oberfläche des Bauteils aufläuft und dabei verformt wird. Gemäß der in dieser Figur 11 dargestellten Schnittzeichnung ist die Schraube in deren unverspannter Lage dargestellt. Der Flansch weist eine dem Bauteil zugewandte ebene Seitenfläche auf, die etwa in der Mitte des Flansches leicht in Richtung zum Bauteil in einer Einkerbung hin abknickt, so dass sich insgesamt eine gewisse Konizität des Flansches ergibt, der nach außen hin von der Einkerbung ab in seiner Stärke abnimmt. Beim Eindrehen der Schraube in das Bauteil trifft der äußere Rand des Flansches zunächst auf das Bauteil auf und wird um die Einkerbung zurückgekippt, bis die ebene Fläche des Flansches auf das Bauteil auftrifft. Daran erkennt der Benutzer, dass damit die hierfür erforderliche Mindestvorspannkraft erreicht ist. Dabei besitzt der Flansch in seinem Bereich nach der Einkerbung nach außen hin eine Wellung, die das Auftreffen des Flansches in gewissem Umfang abfedert. Dabei ist der Spielraum für das Abfedern durch die Wellung besonders klein gehalten, da nämlich der Flansch über seine innere Hälfte mit der ebenen Oberfläche versehen ist, so dass bereits nach kurzem Auftreffen des äußeren Randes des Flansches der innere ebene Flanschteil auf das Bauteil auftrifft und damit das weitere Eindrehen der Schraube in das Bauteil praktisch verhindert.

Der Erfindung liegt die Aufgabe zugrunde, den Spielraum für das Abfedern wesentlich zu vergrößern. Erfindungsgemäß geschieht dies dadurch, dass die beiden Seitenflächen des Flansches vom Schraubenschaft zum Flanschaußenrand kontinuierlich-konisch unter Abnahme der Stärke des Flansches nach außen hin verlaufen und seine Wellung sich im Wesentlichen über die gesamte radiale Breite des Flansches erstreckt.

Aufgrund dieser Gestaltung der Schraube und des zu ihr gehörenden Flansches wird durch zwei sich gegenseitig verstärkenden Maßnahmen der Spielraum der von der Schraube ausgeübten Kraft entsprechend erweitert, nämlich einerseits durch die Abnahme der Stärke des Flansches zum Außenrand hin und außerdem durch die sich über den Flansch erstreckende Wellung, die sich im Wesentlichen über die gesamte radiale Breite des Flansches erstreckt. Auf diese Weise wird beim Anziehen der Schraube einerseits über die Biegung des Flansches selbst als.auch die Rückführung der Wellung in eine mehr gestreckte Lage in einem weiten Bereich ein Spannungserhalt erzeugt, der es ermöglicht, dass selbst bei wesentlichen Änderungen der äußeren Verhältnisse einer mit der erfindungsgemäßen Schraube geschaffenen Schraubenverbindung, zum Beispiel wesentliche Temperaturänderungen, die Schraubverbindung mit der erfindungsgemäßen Schraube derartigen Änderungen folgen kann und damit ihre Bindungskraft über einen weiten Bereich des Anziehens der Schraube weitgehend erhalten bleibt.

Durch die kontinuierlich-konisch nach außen hin verlaufende Seitenflächen des Flansches, die sich über die gesamte Breite des Flansches erstrecken, ergibt sich vom Auftreffen des Randes des Flansches auf das Bauteil bis zum weitgehend flachgedrückten Flansch ein Bereich für die dabei auftretende Vorspannkraft (Zusammenhaltekraft von Bauteilen durch die Schraube), der durch die Konizität des Flansches in der Höhe ein zunehmendes Andrücken des Flansches an das Bauteil ermöglicht, wobei durch die wesentlich über die gesamte radiale Breite des Flansches erstreckte Wellung ein weiterer Bereich zu dem Verbiegen des Flansches kommt, womit sich ein entsprechend großer Spielraum für die Einstellung einer gewünschten Vorspannkraft ergibt. Die erfindungsgemäße Schraube erlaubt damit dem Benutzer, je nach den gewünschten Verbindungseigenschaften von Schraube und Bauteil die zwischen diesen beiden notwendige Vorspannkraft wahlweise einzustellen.

Die dem Bauteil zugewandte Seitenfläche kann man vorteilhaft mit Auflagennoppen versehen, die das Eindrehen der Schraube beim Auftreffen der Schraube auf das Bauteil abbremsen. Die Noppen kann man dann dazu benutzen, durch entsprechende Gestaltung als Sperrverzahnung zu wirken, so dass ein Rückdrehen der Schraube wesentlich erschwert wird.

Zweckmäßig wird die Wellung der Schraube so gestaltet, dass die höchste und tiefste Stellung der Wellung durch eine periodische Funktion bestimmt ist. Hierdurch erreicht man eine besondere Gleichmäßigkeit der Wirkung ihres Umfangs auf ein Gegenstück.

Für die Wellung selbst hat sich als besonders zweckmäßig herausgestellt, die die Wellung bestimmende periodische Funktion so zu gestalten, dass diese zwischen dem 0,025-fachen und dem 0,5-fachen des Flanschumfangs beträgt. Den Wellen, gibt man vorteilhaft einen bestimmten Höchstwert, um den Effekt des Flansches nicht einzuengen. Dieser Höchstwert der Amplitude der periodischen Funktion liegt zweckmäßig zwischen dem 0,006-fachen und dem 0,12-fachen des Flanschdurchmessers. Dabei hat sich als besonders vorteilhaft herausgestellt, die Amplitude der Wellung vom Flanschaußenrand zur Mitte kontinuierlich abnehmen zu lassen.

Es wird noch erwähnt, dass es aber auch natürlich möglich ist, die Wellung des Flansches asymmetrisch zu gestalten.

Um die Wirkung des Flansches zu verstärken, kann man vorteilhaft die dem Bauteil abgewandte Seitenfläche des Flansches mit radial nach außen verlaufenden linienförmigen Verstärkungen versehen.

In den Figuren ist ein Ausführungsbeispiel der Erfindung dargestellt. Es zeigen
- Fig. 1: die Schraube mit Schraubenschaft und Schraubenkopf, der teilweise geschnitten dargestellt ist,
- Fig. 2: den Schraubenkopf allein im Schnitt,
- Fig. 3: den Schraubenkopf mit radial verlaufenden Verstärkungen,
- Fig. 4a: den Schraubenkopf im Schnitt mit Auflagenoppen,
- Fig. 4b: den Schraubenkopf mit Blickrichtung vom Schaft zum Flansch und Darstellung von Auflagenoppen als Sperrverzahnung,
- Fig. 5: eine Seitensicht des Schraubenkopfes mit Verdeutlichung einer Wellung gemäß einer periodischen Funktion.

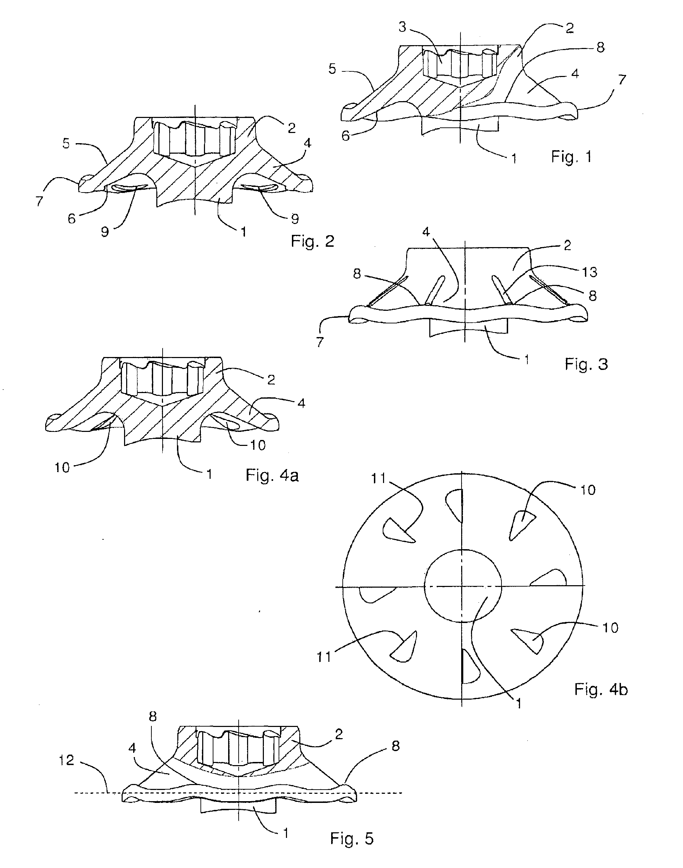

In der Figur 1 ist die erfindungsgemäße Schraube mit dem Schraubenschaft 1 und dem Schraubenkopf 2 dargestellt, wobei der Schraubenkopf 2 teilweise im Schnitt dargestellt ist. In den Schraubenkopf 2 ist ein nach innen reichender Hohlraum 3 eingezeichnet, der einen Innentorx darstellt, der zum Antrieb für eine eingesetzte Schraube dient. Aus dem Schraubenkopf 2 ragt kranzförmig nach außen der konische Flansch 4 heraus, dessen beide Seitenflächen 5 und 6 konisch verlaufen, und zwar so, dass der Flansch 4 zum Rand 7 hin in seiner Stärke ständig abnimmt. Dabei bleibt der jeweilige Konuswinkel der Seitenflächen 5 und 6 über jede Seitenfläche 5 bzw. 6 gleichbleibend und durchgehend erhalten.

Der Flansch 4 besitzt eine aus den Figuren 1, 3 und 5 ersichtliche Wellung, wobei die Wellen mit ihren Erhebungen radial verlaufen und zwar so, dass jede Welle mit ihrer Erhebung 8 vom Rand 7 des Flansches 4 ab nach innen zum Kopf 2 hin verläuft, so dass sich die Welle jeweils vollständig über die gesamte Breite des Flansches 4 erstreckt. Damit erhält der Flansch 4 die Möglichkeit, elastisch von seinem Rand 7 bis zu dem Übergang in den Schraubenkopf 2 hin praktisch nachzugeben, was für die Funktion der Schraube zum Verspannen zweier Bauteile bei unterschiedlichen Temperaturen von besonderer Bedeutung ist.

In der Figur 2 ist die Schraube mit Schraubenkopf 2, Flansch 4 und Schraubenschaft 1 im Schnitt dargestellt, wobei gezeigt ist, dass der Flansch 4 auf seiner unteren Seitenfläche 6 einzelne Noppen 9 trägt, die um den Schaft 1 herum mehrfach an der unteren Seitenfläche 6 des Flansches 4 von dieser Seitenfläche wegragen. Beim Auftreffen der Noppen 9 auf ein Bauteil beim Eindrehen der Schraube ergibt sich ein Bremseffekt, der vom Benutzer bemerkt wird und diesem anzeigt, dass die Schraube im wesentlichen ihre Endstellung beim Einreihen in ein Bauteil erreicht hat.

In Figur 3 ist eine Abwandlung der Gestaltung der Schraube gemäß den Figuren 1 und 2 dargestellt, bei der es sich um die Verstärkung der dem Bauteil abgewandten Seitenfläche handelt, die durch die linienförmigen Verstärkungen 13 herbeigeführt wird. Diese verstärken die Vorspannkraft des Flansches 4, was für entsprechend feste Verbindungen von Vorteil ist.

In den Figuren 4a und 4b sind Noppen 10 dargestellt, die mit einer Kante 11 versehen sind, so dass die Noppen 10 nach Art einer Sperrverzahnung wirken und ein Rückdrehen der Schraube verhindern, mit der die Kanten 11 sich in ein Gegenstück der Schraube eindrücken. Auf diese Weise erreicht man eine doppelte Wirkung mit den Noppen 10, die einerseits beim Eindrehen der Schraube mit Auftreffen der Noppen 10 auf ein Gegenstück einen erwünschten Bremseffekt ausüben und gleichzeitig ein Rückdrehen der Schraube weitgehend verhindern. Figur 4b zeigt die Schraube mit Sicht auf die Rückseite des Flansches 4, die zeigt, dass der Flansch mit acht Noppen 10 versehen ist, die einerseits einen starken Bremseffekt und andererseits die gewünschte Rückdrehsperre bewirken.

Figur 5 zeigt die Schraube in Seitensicht mit einer eingezeichneten gestrichenen Linie 12, durch die die Wellung des Flansches 4 mit den einzelnen Wellen 8 verdeutlicht wird. Die Wellung verläuft hier nach Art einer periodischen Funktion, wobei sowohl die Zahl der Wellen als auch die Höhe der Wellung wahlweise bei der Herstellung der Schraube eingestellt werden kann, je nachdem, welche Wirkung man mit der Wellung erzielt will.

Die in den Figuren dargestellte Schraube ermöglicht es, mit ihrem auf beiden Seitenflächen 5 und 6 konischen Flansch 4 und dessen Wellung über einen erheblichen axialen Bereich der Schraube hin federnd nachgiebig zu wirken, und zwar mit dabei zurückgebogenen Flansch und zusammengedrückter Wellung einen erheblichen Axialbereich zu überbrücken, womit auch bei besonderen Verhältnissen, insbesondere Temperaturänderungen in weitem Bereich, die notwendige Spannung aufrechterhalten bleibt.

## Patentansprüche

1. Schraube mit einem Schraubenkopf (2), einem Schraubenschaft (1) und einem konischen, gewellten Flansch (4) mit nach außen hin abnehmender Stärke, der sich beim Eindrehen der Schraube in ein Bauteil an diesem anlegt, **dadurch gekennzeichnet, dass** die beiden Seitenflächen (5, 6) des Flansches (4) vom Schraubenschaft (1) zum Flanschaußenrand (7) kontinuierlich-konisch unter Abnahme der Stärke des Flansches (4) nach außen hin verlaufen und seine Wellung (8) sich im Wesentlichen über die gesamte radiale Breite des Flansches (4) erstreckt.

2. Schraube nach Anspruch 1, **dadurch gekennzeichnet, dass** die dem Bauteil zugewandte Seitenfläche (6) mit Auflagenoppen (9) versehen ist, die das Eindrehen der Schraube beim Auftreten der Schraube auf das Bauteil abbremsen.

3. Schraube nach Anspruch 2, **dadurch gekennzeichnet, dass** die Auflagenoppen als Sperrverzahnung (11) gestaltet sind.

4. Schraube nach einem der Ansprüche 1 bis 3, **dadurch gekennzeichnet, dass** die höchste und tiefste Stelle der Wellung (8) durch eine periodische Funktion bestimmt ist.

5. Schraube nach Anspruch 4, **dadurch gekennzeichnet, dass** der Höchstwert der Wellenlänge der periodischen Funktion zwischen dem 0,025-fachen und dem 0,5-fachen des Flanschumfangs beträgt.

6. Schraube nach Anspruch 4 oder 5, **dadurch gekennzeichnet, dass** der Höchstwert der Amplitude einer derartigen periodischen Funktion zwischen dem 0,006-fachen und dem 0,12-fachen des Flanschdurchmessers beträgt.

7. Schraube nach einem der Ansprüche 4 bis 6, **dadurch gekennzeichnet, dass** die Amplitude der Wellung (8) vom Flanschaußenrand (7) zur Mitte hin kontinuierlich abnimmt.

8. Schraube nach einem der Ansprüche 1-7, **dadurch gekennzeichnet, dass** die Wellung (8) des Flansches (4) asymmetrisch gestaltet ist.

9. Schraube nach einem der Ansprüche 1-8, **dadurch gekennzeichnet, dass** die dem Bauteil abgewandte Seitenfläche (5) radial nach außen verlaufende linienförmige Verstärkungen (13) aufweist.

## Claims

1. A screw having a screw head (2), a screw shank (1) and a corrugated conical flange (4) which flange decreases in thickness decreases towards its periphery and will abut on a component part as said screw is being screwed into the latter **characterized in that** the two lateral surfaces (5, 6) of said flange (4) taper continuously from said screw shank (1) to the outer edge (7) of said flange, with the thickness of said flange (4) decreasing toward its periphery and its corrugation (8) extending over substantially the entire radial width of said flange (4).

2. The screw of claim 1 **characterized in that** the lateral surface (6) facing the component part has contact protrusions (9) provided thereon which will act to slow down the tightening of the screw once it has contacted the component part.

3. The screw of claim 2 **characterized in that** said contact protrusions are designed in the manner of locking teeth (11).

4. The screw of one of claims 1 to 3 **characterized in that** the highest and lowest points of the corrugation (8) are determined by a periodic function.

5. The screw of claim 4 **characterized in that** the maximum wavelength value of the periodic function is between 0.025 times and 0.5 times the value of the circumference of the flange.

6. The screw of claims 4 or 5 **characterized in that** the maximum value of the amplitude of such a periodic function is between 0.006 times and 0.12 times the value of the flange diameter.

7. The screw of one of claims 4 to 6 **characterized in that** the amplitude of said corrugation (8) decreases continuously from the outer edge (7) of said flange toward its centre.

8. The screw of one of claims 1 to 7 **characterized in that** said corrugation (8) of the flange (4) is of asymmetrical design.

9. The screw of one of claims 1 to 8 **characterized in that** the lateral surface (5) facing away from the component part has linear reinforcements (13) that extend radially to the outside.

## Revendications

1. Vis comprenant une tête (2), une tige (1) et une collerette ondulée conique (4) dont l'épaisseur décroît vers l'extérieur et qui, lors du vissage de la vis dans un élément de construction, vient s'appuyer contre cet élément, **caractérisée en ce que** les deux faces latérales (5, 6) de la collerette (4) s'étendent de la tige (1) au bord extérieur de la collerette (7) avec une forme conique continue en faisant diminuer l'épaisseur de la collerette (4) vers l'extérieur, et que l'ondulation de la collerette s'étend essentiellement sur toute la largeur radiale de la collerette (4).

2. Vis selon la revendication 1, **caractérisée en ce que** la face latérale (6) orientée vers l'élément de construction est pourvue de noeuds de support (9) qui ralentissent le vissage de la vis lorsque cette dernière rencontre l'élément de construction.

3. Vis selon la revendication 2, **caractérisé en ce que** les noeuds de support sont configurés comme une denture de blocage (11).

4. Vis selon l'une des revendications 1 à 3, **caractérisée en ce que** la position la plus élevée et la plus basse de l'ondulation (8) est déterminée par une fonction périodique.

5. Vis selon la revendication 4, **caractérisé en ce que** la valeur maximale de la longueur d'onde de la fonction périodique est de 0,025 à 0,5 fois la circonférence de la collerette.

6. Vis selon la revendication 4 ou 5, **caractérisée en ce que** la valeur maximale de l'amplitude d'une telle fonction périodique est de 0,006 à 0,12 fois le diamètre de la collerette.

7. Vis selon l'une des revendications 4 à 6, **caractérisée en ce que** l'amplitude de l'ondulation (8) décroît de façon continue entre le bord extérieur de la collerette (7) et le centre.

8. Vis selon l'une des revendications 1 à 7, **caractérisée en ce que** l'ondulation (8) de la collerette (4) a une forme asymétrique.

9. Vis selon l'une des revendications 1 à 8, **caractérisée en ce que** la face latérale (5) qui n'est pas orientée vers l'élément de construction présente des renforcements rectilignes qui s'étendent radialement, vers l'extérieur.
